# EUROPÄISCHE PATENTSCHRIFT

(11) **EP 2 862 736 B1**
(45) Veröffentlichungstag und Bekanntmachung des Hinweises auf die Patenterteilung: **21.11.2018**
(21) Anmeldenummer: 14188410.6
(22) Anmeldetag: 10.10.2014
(51) Int. Cl.: B60H 1/00, B60H 1/24, B60P 3/20, F25B 1/00, F25B 49/02

(54) **Einrichtung zur Temperatur-Regelung für Laderäume von Kleintransportern**
Device for controlling the temperature of cargo compartments of delivery vans
Dispositif de régulation de la température pour l'espace de chargement de fourgonnettes

(30) Priorität: 21.10.2013 DE 202013104738 U
(43) Veröffentlichungstag der Anmeldung: 22.04.2015
(73) Patentinhaber: Greshake, Hermann, 26826 Weener (DE)
(72) Erfinder: Greshake, Hermann, 26826 Weener (DE)
(74) Vertreter: Schoenen, Norbert

(56) Entgegenhaltungen:
- EP-A1- 0 323 196
- WO-A2-2006/078379
- DE-A1- 3 411 053
- FI-A- 920 968

## Beschreibung

Die Erfindung betrifft eine Einrichtung zur Temperatur-Regelung für Laderäume von Kleintransportern nach dem Oberbegriff von Anspruch 1.

### Stand der Technik

Für eine Vielzahl von Gütern, die mit Kleintransportern transportiert und ausgeliefert werden, ist von den zuständigen Behörden ein enges Temperaturfenster, welches weder über- noch unterschritten werden darf, vorgeschrieben, z. B. für Arzneimittel 20 °C +/- 5 °C. Diese Vorschriften sind neu und noch nicht flächendeckend umgesetzt.

Für die Spediteure bedeutet dieses die Neuanschaffung von entsprechend ausgerüsteten Fahrzeugen oder eine sehr teure Nachrüstung der bestehenden Fahrzeuge.

Bestehende Lösungen arbeiten mit einem Kombigerät zum Heizen und Kühlen. Der Kühlkompressor wird vom Motor des Fahrzeuges mittels Keilriemen angetrieben. Hieraus ergeben sich folgende Probleme:
Da die Luftansaugung und der Austritt eng beieinander und in Dachhöhe liegen, ist die gleichmäßige Luftverteilung ein Problem. Der Montageaufwand ist durch den mechanisch angetriebenen Kompressor erheblich. Die Anlagen sind nur für das entsprechende Fahrzeugmodell passend. Ein Umbau in ein anderes Fahrzeug ist nicht ohne Probleme möglich.

Nach Be- und Entladevorgängen wird die gewünschte Temperatur und Temperaturverteilung nur langsam erreicht. Durch die schlechte Verteilung ist ein großes Temperaturfenster nötig.

Weitere Probleme bestehen zum einen in der schlechten Isolierung und der eher geringen Generatorleistung und zum anderen in der speziellen Nutzung der Fahrzeuge. So sind die Fahrstrecken zwischen den Lieferstellen eher kurz und beim Be- und Entladen findet ein Austausch der inneren und äußeren Luft statt. Eine gleichmäßige Temperaturverteilung wird aktuell durch sehr aufwändige Isolierungen und Heiz/Klima-Kombigeräte mit direkt vom Fahrzeugmotor angetriebenen Kompressoren erreicht.

Die DE 42 42 672 C2 betrifft eine Transportgutbeheizung für Lastkraftwagen. Hier wird die Verpackung des Ladegutes direkt beheizt. Eine Kühlung ist nicht vorgesehen. Im Boden sind auch keine Austrittsöffnungen für Temperierungsluft vorhanden.

Die Heizung erfolgt mit einem Heizaggregat 22, welches mit Gas betrieben wird. Die Wärme des Motors wird nicht genutzt. Der gesamte Innenraum wird nicht temperiert, sondern nur die Verpackung des Ladegutes. Es handelt sich auch nicht um einen Einbausatz für einen nachträglichen Einbau. Dieser nachträgliche Einbau ist offensichtlich nicht möglich.

In der DE 103 50 177 A1 wird ein Dachmodul für ein Fahrzeug mit integrierter Klimaanlage beschrieben. Es handelt sich hier nicht um einen Lastkraftwagen, sondern um einen PKW, wobei das Klimatisierungsmodul auf dem Dach angeordnet ist. Das Dachmodul kann kühlen und heizen, also eine vorgegebene Temperatur einregeln.

Mit dieser Anordnung kann aber eine optimale Temperierung der Luft im Innenraum nicht erreicht werden, da keine Zwangsumwälzung erfolgt und keine optimale Strömung durch den gesamten Innenraum stattfindet. Die Luft strömt nämlich aus dem Dachmodul in das Innere des PKWs und wieder in das Dachmodul zurück. Daher gibt es Bereiche (tote Ecken) im Innenraum des PKWs, die nicht von der temperierten Luft durchströmt werden.

In der DE 2012 204 713 A1 wird ein Ladeboden mit Klimatisierungsöffnungen für einen Lastkraftwagen beschrieben. Es handelt sich hier um einen vollflächigen Ladeboden. Es ist nicht erkennbar, dass die Anordnung zum Nachrüsten geeignet ist. Auch ein Umbau, das heißt ein Wechsel des Ladebodens vom einen zum anderen Fahrzeug scheint schwierig bzw. unmöglich zu sein.

Der Ladeboden hat über seine gesamte Fläche Austrittsöffnungen für die klimatisierte Luft, insbesondere auch im vorderen Bereich.

In der Schrift findet sich kein Hinweis auf die Führung der temperierten Luftströme außerhalb des Ladebodens. Eine optimale Luftzirkulation ist hier nicht offenbart.

In der EP 2 596 978 A1 wird ein Thermofahrzeug beschrieben. Es handelt sich hier insbesondere um ein Kühlfahrzeug, also einen Lastkraftwagen mit einer temperierbaren, thermisch isolierten Zelle. Die Kühleinrichtung 20 ist auf dem Dach des Fahrzeugs angebracht. Der Ein- und Auslass der Luft ist ebenfalls oben. Es ist nicht erkennbar, dass dieses System zum Nachrüsten geeignet ist.

Außerdem findet keine optimale Luftzirkulation statt, da hier die Kühleinrichtung 20 ein Dachmodul wie bei der DE 103 50 177 A1 ist.

In keiner der Schriften wird die erfindungsgemäße Luftzirkulation in Folge der Anordnung der Ein- und Auslässe beschrieben, um eine gleichmäßige Verteilung der temperierten Luft innerhalb des gesamten Innenraums ohne Bildung von Toträumen zu erreichen, und zwar in kürzester Zeit. Oft wird auch nicht die Möglichkeit zum nachträglichen Einbau, also zur Nachrüstung offenbart. Die bekannten Systeme sind in der Regel nicht dazu geeignet.

Eine Einrichtung nach dem Oberbegriff von Anspruch 1 ist aus der DE 34 11 053 A1 bekannt.

In der FI 920 968 A wird ein Belüftungssystem in einem Lastkraftwagen und zwar nur zum Beheizen offenbart. Aus den Figuren 1 und 2 dieses Dokumentes geht die Strömung des Belüftungssystems, welche durch Pfeile dargestellt ist, hervor. Hier sind Düsen am hinteren Ende der Ladefläche angeordnet, welche nach oben hin gerichtet sind, um einen Luftvorhang zu erzeugen. Die Luft strömt daher am hinteren Ende des Laderaums von unten nach oben zur Decke des Laderaums und von dort an der Decke entlang nach vorne zum vorderen Teil des Lastkraftwagens, um dort angesaugt und nach unten zum Wärmetauscher geleitet zu werden. Von dort, also vom vorderen unteren Bereich des Laderaums, strömt die Luft nach hinten am Boden des Laderaums entlang bis zu einem Gebläse.

Derartige Belüftungssysteme, die an der hinteren Ladewand einen Luftvorhang erzeugen, dienen dazu, dass die Innenluft im Laderaum beim Beladen und Entladen nicht nach außen dringt und die Außenluft beim Beladen und Entladen nicht nach innen eindringt. Dies ist wichtig bei unterschiedlichen, insbesondere stark unterschiedlichen Außentemperaturen, damit die Innentemperatur im Laderaum trotz Beladens und Entladens aufrechterhalten wird.

Bei der Strömung, wie sie bei dem Belüftungssystem nach FI 920 968 A erzeugt wird, wird aber nicht der gesamte Laderaum gleichmäßig beheizt und gekühlt. Im mittleren Bereich des Ladevolumens findet keine Heizung statt.

### Aufgabe und Lösung der Erfindung

Aufgabe der Erfindung: Bei einem kostengünstigen und leicht nachzurüstenden System, welches unabhängig vom Fahrzeugmodell leicht vom einen in das andere Fahrzeug umbaubar ist, soll der gesamte Innenraum ohne Bildung von Toträumen gleichmäßig temperiert werden, wobei ein enges Temperaturfenster weder über- noch unterschritten werden und nach Be- und Entladevorgängen die gewünschte Temperatur und Temperaturverteilung erheblich schneller als im Stand der Technik erreicht werden soll. Auch soll das System unabhängig vom Fahrzeugmodell leicht von einem in das andere Fahrzeug umzubauen sein.

Diese Aufgabe wird bei einer Einrichtung zur Temperatur-Regelung für Laderäume von Kleintransportern der eingangs genannten Art erfindungsgemäß durch die Merkmale von Anspruch 1 gelöst.

Die Kühlanlage wird elektrisch angetrieben. Der Montageaufwand ist erheblich geringer als beim Antrieb mittels Keilriemen durch den Fahrzeugmotor.

### (weiter mit Seite 5 der ursprünglichen Beschreibung)

Durch die spezielle Steuerung (Intervallbetrieb) der Anlage ist der Einbau einer elektrischen Kühlanlage möglich. Der benötigte Strom ist sonst höher als er von den werkseitigen Generatoren erzeugt werden kann.

Durch die Bodenplatte mit Luftkanälen sind der Lufteintritt und der Austritt im Fahrzeug weit voneinander entfernt.

Durch die Trennung und die spezielle Anordnung der Kühlung und Heizung in Kombination mit den Abstandsleisten wird eine optimale Verteilung erreicht. Die erwärmte oder gekühlte Luft ist sofort im gesamten Laderaum verteilt.

Die Verteilung der Luft ist erheblich gleichmäßiger und schneller. Die Anlage ist problemlos in verschiedene Fahrzeuge einzubauen. Der Ausbau und die Montage in ein anderes Fahrzeug sind ohne Einschränkung möglich. Das Temperaturfenster kann sehr klein gehalten werden. Da der Montageaufwand erheblich geringer ist, ist der Kostenvorteil sehr groß.

Durch die Konstruktion der Bodenplatte wird die Temperatur bei Be- und Entladevorgängen besser gehalten.

Erreicht werden die Vorteile insbesondere durch vier Module, nämlich
- eine elektrisch angetriebene Klimaanlage, welche auf dem Dach montiert wird
- eine zusätzliche Heizung, die vom Fahrzeugmotor mit Wärmeenergie versorgt wird und im Laderaum vorn eingebaut wird
- ein Laderaumboden mit Luftkanälen und Austrittsöffnungen nur im mittleren und hinteren Bereich und Abstandsleisten
- ein Steuergerät mit Temperaturfühler und Fernanzeige.

Zusätzlich reicht eine nur einfache Isolierung aus.

### Ausführungsbeispiel

Im Folgenden wird ein Ausführungsbeispiel der Erfindung anhand von Zeichnungen näher beschrieben. In allen Zeichnungen haben gleiche Bezugszeichen die gleiche Bedeutung und werden daher gegebenenfalls nur einmal erläutert.

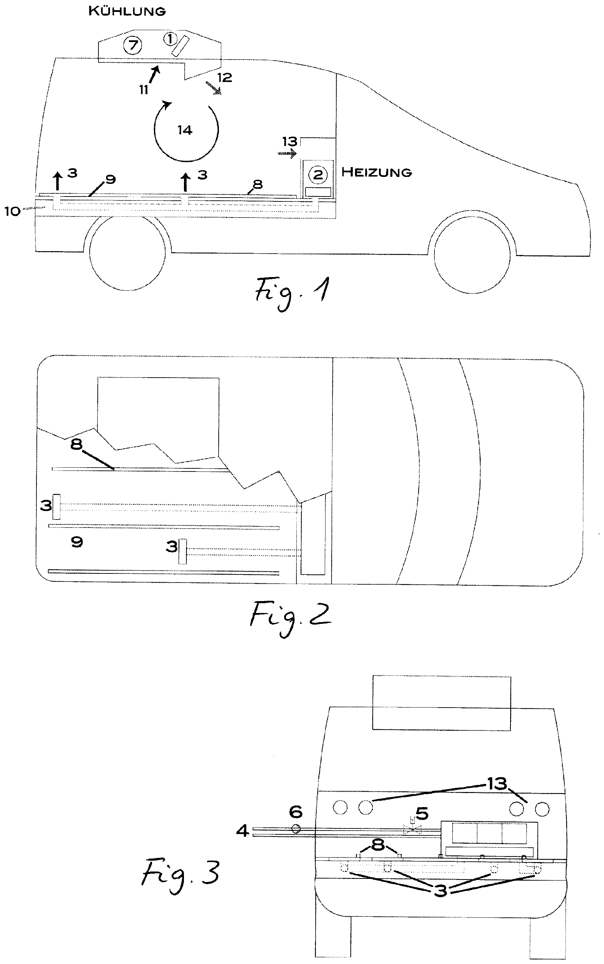

Es zeigen
- Figur 1: eine Seitenansicht des Kleintransporters mit der erfindungsgemäßen Einrichtung in schematischer Darstellung,
- Figur 2: eine Ansicht des Kleintransporters nach Figur 1 von oben und
- Figur 3: eine Ansicht des Kleintransporters nach Figur 1 von hinten.

Nach dem Motorstart werden die Gebläse (1) und (2) mit geringer Leistung eingeschaltet. Ein Teil der vom Gebläse (1) aus dem Heck oben angesaugten Luft wird in Richtung Gebläse (2) geleitet, angesaugt und durch die Luftkanäle an die Austrittsöffnungen (3) geleitet. Die Abstandsleisten (8) auf der Bodenplatte (9) verhindern das Verschließen der Öffnungen und ermöglichen die Luftzirkulation auch unter der Ladung.

Der Kühlkompressor (7) ist abgeschaltet, das Ventil (5) geschlossen, die Pumpe (6) abgeschaltet.

Der Temperaturfühler misst die Lufttemperatur und schaltet nach Bedarf auf Kühl- oder Heizbetrieb.

### A: Heizbetrieb

Das Heizgerät wird mittels der Wasserschläuche (4) vom Motor mit Wärme versorgt. Das Ventil (5) öffnet und die Pumpe (6) sorgt für den nötigen Durchsatz. Das Gebläse (2) leitet die vom Wärmetauscher erwärmte Luft zu den Austrittsöffnungen (3). Die erwärmte Luft steigt nach oben und wird vom Gebläse (1) angesaugt und nach vorn und zur Ansaugöffnung von Gebläse (2) geleitet. Gebläse (2) arbeitet mit hoher, Gebläse (1) mit geringer Leistung.

### B: Kühlbetrieb

Der Kühlkompressor (7) wird in Intervallen, in Abhängigkeit von der Generatorleistung, zu- und abgeschaltet. Die Fahrzeugbatterie dient als Puffer und verhindert ein Absinken der Spannung. Die gekühlte Luft wird vom Gebläse (1), welches mit hoher Leistung läuft, nach vorn geleitet. Ein Teil der gekühlten Luft wird vom Gebläse (2) über die Austrittsöffnungen zur Mitte und nach hinten geleitet. Gebläse (2) läuft mit geringer Leistung. Es findet wiederum ein Kreislauf mit optimaler Verteilung statt.

### Weitere Erläuterungen zur Arbeitsweise:

10 Sekunden nach dem Starten des Kleintransporters schaltet das Steuergerät die Lüfter der Klimaanlage und Heizung mit geringer Leistung ein. Durch die Anordnung der Komponenten wird die Luft im hinteren oberen Bereich angesaugt, vom Lüfter der Klimaanlage in Richtung Heizung weitergeleitet und vom Lüfter der Heizung durch die Luftkanäle im Boden zur Mitte und in den hinteren Teil weitergeleitet. Die Abstandleisten am Boden verhindern den direkten Kontakt der Transportgüter mit dem Boden und ermöglichen eine optimale Verteilung der Luft.

Der Temperaturfühler mit eigener Luftansaugung misst die Lufttemperatur und schaltet den Heiz- oder Kühlbetrieb ein.

Beim Kühlbetrieb erzeugt der elektrisch angetriebene Kompressor die nötige Kälteenergie und leitet diese über den jetzt mit hoher Leistung laufenden Lüfter in Richtung Heizung. Um das elektrische Bordnetz nicht zu überlasten, ersetzt man die Fahrzeugbatterie erfindungsgemäß durch eine mit höherer Kapazität, nutzt diese als Puffer und lässt den Kompressor in Abhängigkeit von der Generatorleistung in Intervallen arbeiten. Der Lüfter der Heizung transportiert die gekühlte Luft weiter zur Mitte und in den hinteren Teil.

Beim Heizbetrieb wird die Heizung über zum Motor verlegte Wasserleitungen, eine elektrische Wasserpumpe und ein elektrisches Ventil mit Wärme versorgt. Über den Wärmetauscher und den mit hoher Leistung laufenden Lüfter wird die erwärmte Luft durch die Luftkanäle zur Mitte und in den hinteren Teil geleitet. Der Lüfter der Klimaanlage transportiert die Luft wieder nach vorn.

Durch das Erwärmen oder Kühlen der Bodenplatte ist ein Puffer für die Be- und Entladevorgänge vorhanden.

### Bezugszeichenliste

- 1: Gebläse der Kühlung
- 2: Gebläse der Heizung
- 3: Austrittsöffnungen
- 4: Wasserschläuche zum Motor
- 5: Elektrisches Ventil
- 6: Elektrische Wasserpumpe
- 7: Elektrischer Kompressor
- 8: Abstandshalter
- 9: Boden
- 10: Isolierung
- 11: Ansaugen Kühlanlage
- 12: Austritt Kühlanlage
- 13: Ansaugen Heizung
- 14: Luftbewegung

## Patentansprüche

1. Einrichtung zur Temperatur-Regelung für Laderäume von Kleintransportern, ausgestaltet als ein leicht nachzurüstendes System,
als Einbausatz zum nachträglichen Einbau, mit einer Kühlanlage (1, 7) mit einem elektrisch angetriebenen Gebläse (1),
wobei die Kühlanlage (1, 7) auf dem Dach des Kleintransporters montierbar ist,
wobei die Kühlanlage (1, 7) mindestens eine in Fahrzeugrichtung nach vorn gerichtete Austrittsöffnung für die gekühlte Luft und mindestens eine in Fahrzeugrichtung nach hinten gerichtete Einlassöffnung für die angesaugte Luft aufweist,
**dadurch gekennzeichnet,**
**dass** eine Heizung (2) mit einer elektrisch angetriebenen Wasserpumpe (6) und ein Steuergerät vorgesehen sind,
**dass** die Kühlanlage (1, 7) einen elektrischen Antrieb für einen Kompressor (7) und das Gebläse (1) aufweist,
**dass** die Kühlanlage (1, 7) mittels des gemeinsamen Steuergeräts im Intervallbetrieb betreibbar ist,
**dass** die Heizung (2) mindestens eine Einlassöffnung für die angesaugte Luft aufweist und die mindestens eine Einlassöffnung im Laderaum vorn - in Fahrzeugrichtung gesehen - angeordnet ist,
**dass** ein zusätzlicher Fahrzeugboden (9) mit Luftkanälen vorgesehen ist,
**dass** auf dem Boden (9) des Laderaums Luftkanäle mit Austrittsöffnungen (3) für die erwärmte Luft vorgesehen sind und
**dass** diese Austrittsöffnungen (3) nur im mittleren und hinteren Bereich des Laderaums vorgesehen sind.

2. Einrichtung nach Anspruch 1,
**dadurch gekennzeichnet,**
**dass** die Heizung (2) im Laderaum vorn einbaubar ist.

3. Einrichtung nach Anspruch 1,
**dadurch gekennzeichnet,**
**dass** die mindestens eine Einlassöffnung der Heizung (2) für die angesaugte Luft in Fahrzeugrichtung nach hinten gerichtet ist.

4. Einrichtung nach Anspruch 1,
**dadurch gekennzeichnet,**
**dass** die Austrittsöffnungen (3) für die erwärmte Luft nach oben gerichtet sind.

5. Einrichtung nach Anspruch 1,
**dadurch gekennzeichnet,**
**dass** Abstandsleisten (8) auf dem Boden (9) des Laderaums vorgesehen sind.

## Claims

1. Device for controlling the temperature of cargo spaces in light commercial vehicles, designed as a system which can be easily retrofitted,
as an installation kit for subsequent installation, comprising a cooling system (1, 7) having an electrically driven fan (1),
it being possible to mount the cooling system (1, 7) on the roof of the light commercial vehicle, the cooling system (1, 7) having at least one outlet opening, oriented towards the front in the vehicle direction, for the cooled air and at least one inlet opening, oriented towards the rear in the vehicle direction, for the air that has been drawn in,
**characterised in that**
a heater (2) having an electrically driven water pump (6) and a controller are provided,
**in that** the cooling system (1, 7) has an electric drive for a compressor (7) and the fan (1),
**in that** the cooling system (1, 7) can be operated by means of the shared controller in the interval operation,
**in that** the heater (2) has at least one inlet opening for the air that has been drawn in and the at least one inlet opening is arranged at the front of the cargo space when viewed in the vehicle direction,
**in that** an additional vehicle floor (9) having air ducts is provided,
**in that** air ducts having outlet openings (3) for the heated air are provided on the floor (9) of the cargo space and
**in that** said outlet openings (3) are provided only in the central and the rear region of the cargo space.

2. Device according to claim 1, **characterised in that** the heater (2) can be installed at the front of the cargo space.

3. Device according to claim 1, **characterised in that** the at least one inlet opening of the heater (2) for the air that has been drawn in is oriented towards the rear in the vehicle direction.

4. Device according to claim 1, **characterised in that** the outlet openings (3) for the heated air are oriented upwards.

5. Device according to claim 1, **characterised in that** spacer strips (8) are provided on the floor (9) of the cargo space.

## Revendications

1. Installation de réglage de la température de zones de chargement de camionnettes, se présentant sous forme de système facile à équiper, de kit à monter ultérieurement, avec un groupe frigorifique (1, 7) doté d'un ventilateur électrique (1), le groupe frigorifique (1, 7) pouvant être monté sur le toit de la camionnette, le groupe frigorifique (1, 7) présentant au moins une ouverture de sortie de l'air refroidi orientée vers l'avant dans la direction du véhicule et au moins une ouverture d'admission de l'air aspiré orientée vers l'arrière dans la direction du véhicule, **caractérisée en ce que** un système de chauffage (2) avec pompe à eau électrique (6) et un dispositif de commande sont prévus, le groupe frigorifique (1, 7) présente une commande électrique pour un compresseur (7) et le ventilateur (1), le groupe frigorifique (1, 7) est utilisable de manière intermittente à l'aide du dispositif de commande commun, le système de chauffage (2) présente au moins une ouverture d'admission de l'air aspiré et au moins ouverture d'admission est agencée dans la zone de chargement avant - dans la direction du véhicule -, un plancher supplémentaire (9) avec conduits d'air est prévu, des conduits d'air avec ouvertures de sortie (3) de l'air chaud sont prévus sur le plancher (9) de la zone de chargement et ces ouvertures de sortie (3) sont prévues seulement au milieu et à l'arrière de la zone de chargement.

2. Installation selon la revendication 1, **caractérisée en ce que** le système de chauffage (2) est montable dans la zone de chargement avant.

3. Installation selon la revendication 1, **caractérisée en ce que** au moins une ouverture d'admission du système de chauffage (2) de l'air aspiré est dirigée vers l'arrière, dans la direction du véhicule.

4. Installation selon la revendication 1, **caractérisée en ce que** les ouvertures de sortie (3) de l'air chaud sont orientées vers le haut.

5. Installation selon la revendication 1, **caractérisée en ce que** des entretoises (8) sur le plancher (9) de la zone de chargement sont prévues.
